# EUROPÄISCHE PATENTANMELDUNG

(11) **EP 0 701 366 A2**
(43) Veröffentlichungstag der Anmeldung: **13.03.1996**
(21) Anmeldenummer: 95113874.2
(22) Anmeldetag: 04.09.1995
(51) Int. Cl.: H04N 5/44

(54) **Fernsehgerät**

(30) Priorität: 09.09.1994 DE 4432169
(71) Anmelder: Bosch-Siemens Hausgeräte GmbH, D-81669 München (DE)
(72) Erfinder: Lerch, Dietmar, D-85221 Dachau (DE)

(57) **Zusammenfassung**

Fernsehgerät mit einer Decoder-Einrichtung (De) zur selbständigen Erkennung des Formats einer empfangenen Sendung und Anpassung an die Bildschirmgröße der Fernsehgeräte, wobei eine Anpassungseinrichtung Mittel enthält, um entsprechend dem erkannten Format durch Vergleich (Ve) mit der Bildschirmgröße eine die Bildhöhe und Bildbreite der empfangenen an die Bildschirmgröße anpassende Bild-Ablenkeinrichtung (Ab) selbständig zu aktivieren.

## Beschreibung

Die Erfindung bezieht sich auf ein Fernsehgerät mit einer Decoder-Einrichtung zur selbständigen Erkennung des Formats einer empfangenen Sendung und Anpassung an die Bildschirmgröße des Fernsehgerätes.

Für Farbfernsehsysteme, d.h. Fernsehsender und Fernsehempfänger, also Fernsehgeräte, gelten nicht nur regional unterschiedliche, untereinander nicht kompatible Fernsehnormen oder Standards, wie PAL, SECAM und dgl., sondern die von den Fernsehanstalten ausgestrahlten Sendungen besitzen auch unterschiedliche Bild-Formate, worunter das Bild-Seiten-Verhältnis, z.B. 4:3 für sogenannte Fernsehfilme oder 16:9 für sogenannte Kinofilme im Cinemascope-Format verstanden werden. Entsprechend werden Fernsehgeräte angeboten mit einem Bildschirm-Format von 4:3 oder 16:9, sogenannte Breit-Bildschirme, wobei innerhalb dieser Bildschirm-Formate wiederum unterschiedliche Bildschirmgrößen, gekennzeichnet durch die jeweilige Länge der Bildröhren-Diagonale, angeboten werden.

Um nun mit einem einzigen Fernsehgerät Sendungen unterschiedlichen Formats ohne jeglichen Verlust des Sendungs- oder Bildinhaltes und unter möglichst weitgehender Ausnützung des vorhandenen Bildschirmes betrachten zu können, ist es bei 16:9 Fernsehgeräten bekannt, beim Empfang von Sendungen des Standard-Formats 4:3 eines 16:9-Bildes, bei denen ohne zusätzliche Maßnahmen beidseitig am Bildschirmrand nicht angeleuchtete Balken sichtbar sind, durch manuell vorzunehmende Signaleingabe die Bildgröße zu verändern, in der Regel bildschirmfüllend zu vergrößern, wonach nicht selten noch manuell eine Feineinstellung bezüglich der Bildhöhe vorgenommen werden muß. Weiterhin sind Fersehgeräte des Formats 16:9 bekannt, bei denen mittels einer speziellen, kostspieligen Decoder-Einrichtung (PAL plus-Decoder) eine automatische Umschaltung vom Format 4:3 auf Format 16:9 und gleichzeitige z.B. durch Zeileneinfügung eine formatverändernde Bearbeitung des Bildes möglich ist, wenn eine Sendung einer dieser Formate empfangen wird.

Der Erfindung liegt die Aufgabe zugrunde, ohne kostspielige Maßnahmen am Fernsehgerät und ohne manuelle Signaleingabe, d.h. automatisch eine Anpassung der empfangenen Sendung eines von Fernsehgerät unterschiedlichen Formats an das Format und die Bildschirmgröße dieses Fernsehgerätes zu ermöglichen.

Diese Aufgabe wird gemäß der Erfindung gelöst durch die Maßmahmen des Patentanspruches 1. Bevorzugte Ausgestaltungen der Erfindung ergeben sich aus den nachfolgenden Patentansprüchen.

Durch das erfindungsgemäß ausgestaltete Fernsehgerät, das mit einer einfachen und kostengünstigen, nicht-bildbearbeitenden Decoder-Einrichtung versehen ist, lassen sich in automatischer Weise Fernsehsendungen anderen Formats als desjenigen des gerätespezifischen Bildschirms ohne aufwendige Bildbearbeitung, z.B. Zeileneinfügung nach der Umsetzung in das gerätespezifische Format durch Aktivierung der geräteeigenen Bild-Ablenkeinrichtung, z.B. durch Veränderung der Steuerspannung an die jeweilige Bildschirmgröße, bildschirmfüllend anpassen. Zur Erkennung des empfangenen Formats kann vorgesehen sein, daß der Fernsehsender im Fernsehbild-Sendesignal, z.B. in einer Austastlücke, eine entsprechende Information über das gesendete Bildformat ausstrahlt und diese Information vom Fernsehgerät bzw. dessen Decoder-Einrichtung erkannt wird und/oder das Fernsehgerät kann eine elektronische Bildauswertung enthalten, die erkennt, daß z.B. eine 16:9-Sendung empfangen wird. Aufgrund dieser Information erfolgt automatisch eine entsprechende Formatänderung sowie eine Anpassung, z.B. proportionale Vergrößerung des empfangenen Bildes an die vorhandene Bildschirmgröße. Gleichzeitig kann automatisch eine Feineinstellung, z.B. der Bildhöhe erfolgen.

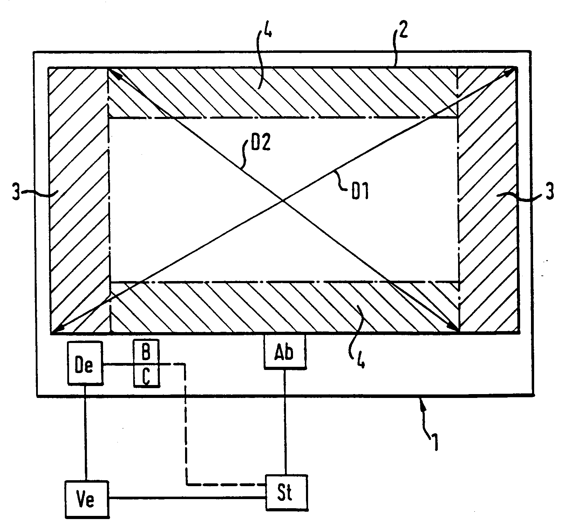

Die Erfindung ist anhand eines in der Zeichnung schematisch dargestellten Ausführungsbeispieles nachstehend erläutert.

Das in der Figur dargestellte Fernsehgerät 1 besitzt einen Bildschirm 2 des Formats (Seiten-Verhältnis) 16:9 mit einer Bildschirm-Diagonale D1 von z.B. 86 cm. Mit Hilfe einer geräteeigenen, üblichen Decoder-Einrichtung De kann eine empfangene Sendung des gleichen Formats 16:9 empfangen, als solche erkannt und in der Bildröhre in bekannter Weise am Bildschirm 2 bildschirmfüllend abgebildet werden. Wird mit nicht erfindungsgemäß ausgestatteten üblichen Fernsehgeräten eine Sendung anderen Formats, z.B. des Formats 4:3 empfangen, so verbleiben entsprechend diesem Abbildungsformat mit der Diagonale D2 beidseitig des Bildes auf dem Bildschirm graue oder schwarze Balken 3. Wird hingegen bei einem Fernsehgerät mit einem Bildschirmformat von 4:3 und der Diagonale D2 eine 4:3-Sendung mit einem ungenutzten Bildformat von 16:9 (Kinofilme) empfangen und unbearbeitet abgebildet, so verbleiben oben und unten entsprechende Balken 4. Werden von einem Fernsehgerät mit einem Bildschirmformat von 16:9 solche 4:3-Sendungen (16:9-Kinofilme im 4:3-Sendeformat) empfangen und unbearbeitet abgebildet, so verbleiben zusätzliche zu den schwarzen Balken 4 oben und unten auch Balken 3 an den Seilen der Abbildung. Das 16:9-Bild wäre also unerwünschterweise um die Balkenbreiten kleiner als der Bildschirm des Fernsehgerätes.

Im erfindungsgemäß ausgestalteten Fernsehgerät 1 ist zusätzlich zur Decoder-Einrichtung De eine Vergleichseinrichtung Ve und eine Steuereinrichtung St für eine übliche Bild-Ablenk-Einrichtung Ab enthalten. Vergleichseinrichtung Ve und Steuereinrichtung St bilden zusammen eine Anpassungseinrichtung. Wird nun eine Sendung vom Fernsehgerät empfangen, so muß das Format bzw. die Bildgröße der empfangenen Sendung vom Fernsehgerät erkannt werden. Dies kann erfolgen durch eine mit der Decoder-Einrichtung De verbundene oder in ihr integrierte Erkennungseinrichtung B, der z.B. in einer Austastlücke eine Information über das ausgesandte Bildformat vom Fernsehsender übermittelt wird und/oder mittels einer Auswerte-Einrichtung C, die ebenfalls mittelbar oder unmittelbar mit der Decoder-Einrichtung De verbunden ist und die das Format und die Bildgröße der empfangenen Sendung erkennt und die entsprechende Information an die Anpassungseinrichtung zur Aktivierung der Bild-Ablenk-Einrichtung weiterleitet. Diese Auswerte-Einrichtung C kann z.B. eine Zähleinrichtung an sich bekannter Art enthalten, durch welche die Zeilenzahl bzw. Bildpunkt-Anzahl der Breiten der vorerwähnten Balkenflächenb 3, 4 ermittelt wird, ggf. während einer vorgegebenen Zeitperiode, um festzustellen, ob eine Veränderung der festgestellten grauen oder schwarzen Zeilen oder Zeilenabschnitte erfolgt oder nicht, d.h. ob es sich hier tatsächlich um den Bildrand oder um den Nutzinhalt eines Bildes handelt. Wird nun eine das Format und- oder die Bildgröße der empfangenen Sendung auf die eine oder andere geschilderte Weise erhalten, so erfolgt automatisch über die Anpassungseinrichtung eine Formatänderung und ggf. eine Anpassung der Bildgröße an die vorhandene Bildschirmgröße des Fernsehgerätes.

## Patentansprüche

1. Fernsehgerät mit einer Decoder-Einrichtung zur selbständigen Erkennung des Formats einer empfangenen Sendung und Anpassung an die Bildschirmgröße der Fernsehgeräte, wobei eine Anpassungseinrichtung Mittel enthält, um entsprechend dem erkannten Format durch Vergleich mit der Bildschirmgröße eine die Bildhöhe und Bildbreite der empfangenen Sendung an die Bildschirmgröße anpassende Bild-Ablenkeinrichtung selbständig zu aktivieren.

2. Fernsehgerät nach Anspruch 1, dadurch gekennzeichnet, daß eine Erkennungseinrichtung für vom Fernsehsender ausgestrahlte Informationen bezüglich des Formats der empfangenen Sendung vorgesehen ist.

3. Fernsehgerät nach Anspruch 1 und/oder 2, dadurch gekennzeichnet, daß eine Auswerteeinrichtung vorgesehen ist, durch die anhand der empfangenen Sendung das Format und die Bildgröße erkannt und zur Aktivierung der Bild-Ablenkeinrichtung verwendet wird.

4. Fernsehgerät nach einem der Ansprüche 1 bis 3, dadurch gekennzeichnet, daß der Bildschirm das Format 16:9 aufweist.
